Europäisches Patentamt

**European Patent Office**

Office européen des brevets

(11) Publication number: **0 185 365 B1**

# EUROPEAN PATENT SPECIFICATION

(45) Date of publication of patent specification: **29.05.91** (51) Int. Cl.⁵: **H04M 17/00**

(21) Application number: **85116107.5**

(22) Date of filing: **17.12.85**

(54) **A pay phone system or a pay service system.**

(30) Priority: **18.12.84 DK 6086/84**

(43) Date of publication of application:
**25.06.86 Bulletin 86/26**

(45) Publication of the grant of the patent:
**29.05.91 Bulletin 91/22**

(84) Designated Contracting States:
**AT BE CH DE FR GB IT LI LU NL SE**

(56) References cited:
**EP-A- 0 041 261      WO-A-84/01073**
**FR-A- 2 286 565      GB-A- 1 080 071**
**GB-A- 2 065 353      US-A- 4 439 636**

(73) Proprietor: **GN Communications A/S**
**Park Allé 295**
**DK-2605 Broendby(DK)**

(72) Inventor: **Folkmann, Peter**
**Engdraget 7**
**DK-4140 Borup(DK)**

(74) Representative: **Patentanwälte Grünecker,**
**Kinkeldey, Stockmair & Partner**
**Maximilianstrasse 58**
**W-8000 München 22(DE)**

Rank Xerox (UK) Business Services

## Description

The present invention relates to a pay service system comprising at least one pay service apparatus and a remote central computer and in particular a pay phone system comprising at least one pay phone apparatus and a remote central computer.

For a great many years, pay phones have been known in which the individual pay phone apparatus is operated by means of coins as telephone calls have been paid for by inserting one or more coins in a slot or the pay phone apparatus. However, the appearance of credit cards issued by credit card organisations, bank organisations, etc. have brought along a desire for a pay phone system, in which a token such as a credit card may be employed. Furthermore, the general trend towards the bill-, note- and coinless society has urged the desire for a pay phone system in which customer calls are paid for by means of tokens such as magnetic cards basically of the conventional magnetic card configuration or a similar configuration. In the present context the phrase "token" is a generic expression for objects such as magnetic cards, magnetic strips, magnetic discs, optically readable cards, discs and strips or electronically readable objects such as active electronic cards, chip cards, etc.

Pay phone systems in which the telephone apparatus is operated by means of a token of the above kinds have also been suggested in the art. However, the known pay phone systems are highly similar to known credit card systems in that the tokens employed in the pay phone systems are personal cards issued to a particular person and in that the person in possession of such a card is requested to verify his legitimacy or authenticity by inputting into the pay phone apparatus a personal verification code or personal authenticity code such as a PIN-code (personal identificiation number-code) known to the legitimate card possessor exclusively. In the system, the authenticity of the card is to be verified, and the authenticity of the person in possession of the card is further to be verified. It is, however, to be realized that this two-step verification procedure involves highly elaborate processing routines, which are normally carried out in an on-line computer system. Transmission of data to and from the remote central computer of the system for verifying the authenticity of the card and for verifying the authenticity of the person in possession of the card takes time due to telephone line transmission limitations, and the transmission actually occupies part of the telephone conversation time and is consequently to be considered as a loss of income to the telephone company. Common to these known pay phone systems is that the secrecy and security of the systems are linked to the secrecy and security of the individual cards which are further dependent on the secrecy and security of the individual authenticity and verification codes known by the legal card possessors exclusively. Examples of these known pay phone systems are disclosed in US patent No. 4,439,636, GB 2065353 and international patent publication No. WO 84/01073.

The basis of the present invention is totally different from these well known pay phone systems of the credit card concept in that it is realized that token allowing for a service performance or a telephone conversation is not a universal means of payment but a means of payment for a specific sort of goods and further of a limited value. Based on this realisation, a pay service system of a concept highly different from the concept of the known telephone systems is provided.

In accordance with the present invention a pay service is provided, comprising:
at least one pay service apparatus and a remote central computer, the pay service apparatus communicating with the central computer through a transmission line, the pay service apparatus being operated by means of a token including data readable from the token and identifying the token and further representing an amount corresponding to an allowable service performance; the pay service apparatus comprising:
a means for receiving the token,
a reading means for reading said readable data from the token received in the token receiving means,
a writing means for writing data in the token,
a first storage means connected to the reading means for storing data read from the token by the reading means, and further being connectable to the transmission line for transferring data to the remote central computer through the transmission line,
a second storage means adressable from the remote central computer through the transmission line and for storing data transferred therefrom,
a comparator means connected to the first storage means and the second storage means for comparing the data stored in the first storage means with the data stored in the second storage means so as to identify the token as a legal token, or alternatively, as an illegal token and further for generating and an accept signal in order to enable the pay service apparatus for a service performance, provided the token is identified as a legal token, or alternatively, for generating and supplying a reject signal to the receiving means, provided the token is identified as an illegal token, in order to make the receiving means reject the token, said accept signal, or alternatively, said reject signal being stored in the first storage means,

a debiting means for generating a signal representing a debiting amount corresponding to the duration of a service performance,

a subtraction means connected to the first storage means and the debiting means and for subtracting the debiting signal from said amount represented by the data read from the token so as to reduce the amount, the reduced amount being stored in first storage means and further being output to the writing means and written in the said token by the writing means at the conclusion of the service performance, and

a gate means connected to the subtraction means and being supplied with said reduced amount during the service performance and for comparing the reduced amount and a predetermined threshold in order to interrupt the service performance when the reduced amount falls below said predetermined threshold;

the pay service apparatus being adapted to output data stored in the first storage means to the transmission line for transferring the data to the remote central computer for storing or processing therein after the conclusion of the service performance; and

the remote central computer being adapted to transfer data identifying legal tokens and data identifying illegal tokens to the second storage means of the pay service apparatus through the transmission line when the pay phone apparatus is not in operation.

In accordance with the concept of the present invention, the service performance is made possible by means of a token, provided the token has been identified by the pay service apparatus as a legal token, and provided the amount corresponding to an allowable service performance is not below the predetermined threshold, i.e. normally larger than zero. Two particular points of the pay service system concept of the present invention are to be underlined.

First, the identification of the token as a legal token is based on a comparison of data read from the token with data input to the second storage means of the pay service apparatus from the remote central computer of the pay service system. The data input to the second storage means by the pay service apparatus, i.e. the data supplied from the remote central computer, may include positive verification data as well as negative verification data. Thus, the verification data stored in the second storage means may include data identifying false tokens or tokens tampered with such as tokens in which it has been attempted to alter the data stored in the token by rewriting data representing an amount larger than the amount written in the token at the conclusion of the latest service performance. The processing of the data in the remote central computer very easily reveals tampering attempts of this kind by simply cross-checking data input from the individual pay service apparatuses of the pay service system regarding the individual tokens. In case it has been attempted to tamper with a token by increasing the amount represented by the data of the token, the token in question will be identified as an illegal token the data supplied to the second storage means of the pay service apparatus from the remote central computer. It is to be understood that the data of the second storage means are updated at intervals and further that the security of the pay service system may be altered, e.g. increased, by increasing the updating cycle and by adapting the processing of the data in the remote central computer to individual requirements.

Second, the transmission of data from the first storage means to the remote central computer and the transmission of data from the remote central computer to the second storage means of the pay phone apparatus do not occupy service performance time and in particular in a pay phone system telephone conversation time. The data transmission to and from the remote central computer may be carried out at any appropriate time when the pay system apparatus is not used, e.g. at low cost time such as by night and further in any appropriate cycle as discussed above.

As already mentioned, the pay service system according to the present invention make constitute a pay phone system. In accordanc with a first embodiment of a pay phone system according to the present invention and constituting a first embodiment of a pay service system according to the present invention, the pay service apparatus is a pay phone apparatus, the transmission line is a telephone line, and the service performance is a telephone call. Like conventional pay phone apparatuses, the pay phone apparatus of the pay phone system according to the present invention communicates with a telephone central exchange through the telephone line.

In some applications, the pay phone apparatuses are arranged adjacent to one another such as in railway stations, airports, hospitals or other public buildings, and a number of pay phone apparatuses may therefore in a pay phone system according to the present invention commonly comprise the first storage means, the second storage means and the comparator means, thus reducing the overall complexity of the system.

In accordance with an alternative embodiment of a pay phone system according to the present invention constituting an alternative embodiment of a pay service system according to the present invention, the pay service apparatus is a pay phone apparatus, and the system further comprises a local computer. Like the above described first embodiment of a pay phone system according to the present invention, the pay phone apparatus of the second embodiment of the pay phone system according to the present invention communicates with a telephone central exchange and the local computer through a telephone line and further with a central computer through a data transmission line or a further telephone line. The service performance is a telephone call, and the reading means and the writing means are connectable to the telephone line for transferring data to the local computer and receiving data from the local computer, respectively, through the telephone line. The first storage means, the second storage means and the comparator means of the pay service apparatus of the pay service system according to the present invention are in this alternative embodiment of the pay phone system according to the present invention included in the local computer.

Dependent on the arrangement of the local computer, the local computer may be assigned to a single pay phone apparatus or in accordance with a further embodiment of this aspect of the present invention be assigned to a plurality of pay phone apparatuses, e.g. assigned to a number of pay phone apparatuses of individual telephone booths of a railway station, an airport or the like.

In accordance with a further embodiment of the pay phone system according to the present invention, the pay phone apparatus is further adapted to be operated by means of a different token representing a credit token and being receivable in the receiving means of the pay phone apparatus and further including data readable from the token and identifying the token, the remote central computer being connected to or being connectable with a further computer of a credit organisation; the comparator means further being adapted to identify the token as a credit token on the basis of the comparision of the data stored in the first storage means with the data stored in the second storage means and to address the first storage means so as to make the first storage means output the data stored therein to the telephone line for transferring the data to the remote central computer, provided the token has been identified as a credit token; the remote central computer further being adapted to address the further computer of the credit organisation when receiving data from the pay phone apparatus regarding the credit token and to transfer the data to the further computer in order to have the further computer verify the authenticity of the credit token, and, provided the credit token has been verified as a legal credit token by the further computer, to enable the pay phone apparatus for a telephone call;

and the pay phone apparatus further being adaped to output the debiting signal generated by the debiting means during the telephone call to the telephone line for transferring therethrough to the central computer when enabled remotely; and the remote central computer further being adapted to transfer the debiting signal received from the pay phone apparatus to the further computer.

The debiting of the telephone call may be limited to an individual maximum limit controlled by the further computer or optionally be limited to a general maximum amount controlled by the remote central computer of the pay phone system.

Although the pay phone system concept of the present invention may be employed in connection with operator operated pay phone apparatuses or voice operated telephone systems, the pay phone apparatus of the pay phone system according to the present invention is preferably a direct dialling telephone apparatus. In the present context, the terms dial and dialling refer to the generation of signals addressing selector means at the telephone central by means of any appropriate dial or switch means, such as keyboards, dials or the like. Consequently, the pay phone apparatus of the pay phone system preferably comprises a dial means including manually operable switch means for generating a sequence of tone burst signals and for supplying the sequence to the telephone exchange through the telephone line for addressing selector means of the telephone exchange.

The teaching of the present invention further renders it possible to adapt the pay phone system into an operational mode in which a telephone subscriber is called and asked if he will accept to pay for the telephone call by providing the pay phone apparatus in an embodiment further comprising a further manually operable switch means and a voice generator means, the further manually operable switch means being connected to the voice generator means and adapted to activate the latter, the first storage means further being adapted to store the sequence of tone burst signals generated by means of the manually operable switch means of the dial means, the voice generator means being adapted to generate a request signal and being connectable to the telephone lines so as to generate and supply the request signal to the telephone line which is activated by the further manually operable switch means, the request signal being further transmitted to the telephone subscriber addressed by the sequence of tone burst signals generated by means of the manually operable switch means of the dial means, and the pay phone apparatus further being adapted to be enabled for the telephone call by an accept signal supplied to the pay phone apparatus from the telephone subscriber apparatus in response to the request signal.

In this embodiment, an accept signal supplied to the telephone apparatus from the telephone subscriber apparatus may be generated in any appropriate manner, e.g. by means of a dial means of the telephone subscriber apparatus, as the request signal may ask the telephone subscriber to activate the dial means of his telephone apparatus in a prescribed manner, i.e. to dial a number mentioned in the request.

Like conventional telephone apparatuses, the telephone apparatus of the pay phone system according to the present invention may further comprise a receiver means including at least two electro-acoustic transducers one of which is adapted to convert acoustic energy into electric energy and to supply said acoustic energy to the telephone line when the pay phone apparatus is in operation, and another one of which is adapted to receive electric energy from the telephone line and convert the electric energy into acoustic energy when the pay phone apparatus is in operation.

Alternatively, the electro-acoustic transducers may be included in an optional or accessory apparatus connected to the pay phone apparatus, e.g. be included in a conventional coin operated telephone apparatus which is further connected to the token operated pay phone apparatus of the pay phone system according to the present invention.

In the above embodiment of the pay phone system according to the invention, the first storage means and the second storage means of the pay phone apparatus may be constituted by individual storage means fulfilling any appropriate requirements. However, in an alternative embodiment, the first storage means and the second storage means of the pay phone apparatus are constituted by first and second parts, respectively, of a single storage means. In order to guarantee that the data stored in the second storage means of the pay phone apparatus, i.e. the data input from the remote central computer representing data including emperical experience collected through the anterior period of time is not lost in case the pay phone apparatus of the pay phone system is disconnected from the supply, i.e. from the telephone line, the second storage means of the pay phone apparatus is preferably constituted by a non-volatile store such as a E²-PROM (electrically eraseable programmable read only memory) whereas the first storage means of the pay phone apparatus may be constituted by a non-volatile or, preferably, a volatile store, such as a RAM (random access memory).

As will be evident from the discussion above and further from the detailed description below, the pay phone apparatus of the pay phone system according to the invention is basically an autonomic unit operating substantially independently of the remote central computer as the verification of the token is carried out in the pay phone apparatus on the basis of the comparison of the data input token and the data previously supplied to the pay phone apparatus from the remote central computer. In accordance with the preferred embodiment of the pay phone apparatus of the pay phone system according to the invention, the pay phone apparatus further comprises a central control means controlling the overall operation of the apparatus. The central control means of the pay phone apparatus may preferably be constituted by a micro-computer means.

The pay phone system may preferably further comprise encryption and/or decryption means in order to transfer data to and from the first storage means and the second storage means of the pay phone apparatus and optionally further transmit data from and to the reading means and the writing means of the pay phone apparatus in an encrypted state. By transmitting the data in an encrypted state, it is prevented that a criminal may gain access to the verification data stored in the second storage means of the pay phone apparatus by tampering with the pay phone apparatus. In a first embodiment of the pay phone system including encryption and/or decryption means within the pay phone apparatus, a decryption means is included in the pay phone apparatus for decrypting data read from the token received in the token receiving means by means of the reading means and further for decrypting data output from the second storage means of the pay phone apparatus. Consequently, the data stored in the token are provided in an encrypted state and the data transferred from the remote central computer to the second storage means of the pay phone apparatus are also provided in an encrypted state. The decryption means may further or alternatively be adapted to decrypt the data output from the first storage means which renders it possible to have the data stored in the first storage means in an encrypted state. In a further or alternative embodiment of the pay phone system further comprising encryption and decryption means, an encryption means is interconnected between the first storage means and the telephone line, and a decryption means is interconnected between the telephone line and the second storage means, for supplying the data output from the first storage means to the telephone line in an encrypted state, and for decrypting the data transferred from the remote central computer to the second storage means from an encrypted state to a decrypted state, respectively.

In order to inform a person operating the telephone apparatus of the telephone system as to the operational state of the system and further the amount consumed from the original amount represented by the data read from the token, the pay phone apparatus may preferably comprise a display means connected to the comparator means, to the subtraction means and to the gate means for displaying information corresponding to the accept signal, or alternatively, the reject signal supplied from the comparator means, for displaying said amount supplied from the subtraction means, and further for displaying information supplied from the gate means.

The token or tokens operating the pay phone system according to the present invention may as discussed above be any of the above tokens including data readable from the token and further rendering it possible to write data in the token. Since the tokens are so to speak consumed by the reduction of the amount represented by data read from the token and are consequently converted into objects of no value, the token in itself is preferably of a construction and configuration representing an extremely low price. An example of a token representing a low price is the magnetic card. Consequently, the token to be employed in connection with the pay phone system according to the invention is preferably a card having a strip of a magnetic material arranged at one side surface of the card, the reading and writing means of the pay phone apparatus being magnetic reading and writing means, respectively.

Apart from providing a token at an extremely low cost by providing the token as a magnetic card, the pay phone system is further made compatible with the conventional magnetic cards issued by credit card organisations, etc. The magnetic card to be employed in connection with the pay phone system according to the present invention is preferably of the concept described in the Applicants' co-pending PCT-application PCT/DK84/00118, in which a magnetic recording member, preferably a magnetic card having a two-part or two-layer magnetic carrier, is described. By providing a two-part two-layer magnetic information carrier in which the two parts or the two layers together constitute a basically homogeneous magnetic part or layer, and in which the first part or first layer includes an original information e.g. the original amount written on the card, and in which the second part or second layer is to be recorded with additional information representing the "consumption" of the amount, a tamper-proof token is provided as it is rendered impossible to alter the additional information without tampering with the original information so that any tampering attempts are very easily detected. The magnetic card to be employed in connection with the pay phone system of the present invention is preferably further conform or basically conform to the ISO 2894 Standard regarding magnetic cards.

The present invention further relates to a pay phone apparatus having any of the above characteristics.

It is believed that the concept of the present invention is advantageously employed in connection with different pay service systems, e.g. in connection with transport vehicles, such as buses, taxis, trains, aeroplanes, ferries, etc. and further in any other situation in which a customer pays for a service.

The present invention will now be further described with reference to the drawings, in which

Fig. 1 is a perspective and schematical view of a pay phone apparatus of a pay phone system according to the present invention connected to a conventional coin operated pay phone apparatus,

Fig. 2 is a perspective and schematical view of a presently preferred embodiment of a pay phone apparatus according to the present invention,

Fig. 3 is an overall block diagram view of the pay phone system concept of the present invention,

Fig. 4 is an overall block diagram illustrating the individual blocks of the presently preferred embodiment of the pay phone apparatus according to the presently preferred invention, and

Fig. 5 is a route diagram illustrating the verification routine of the above presently preferred embodiment of the pay phone apparatus according to the invention.

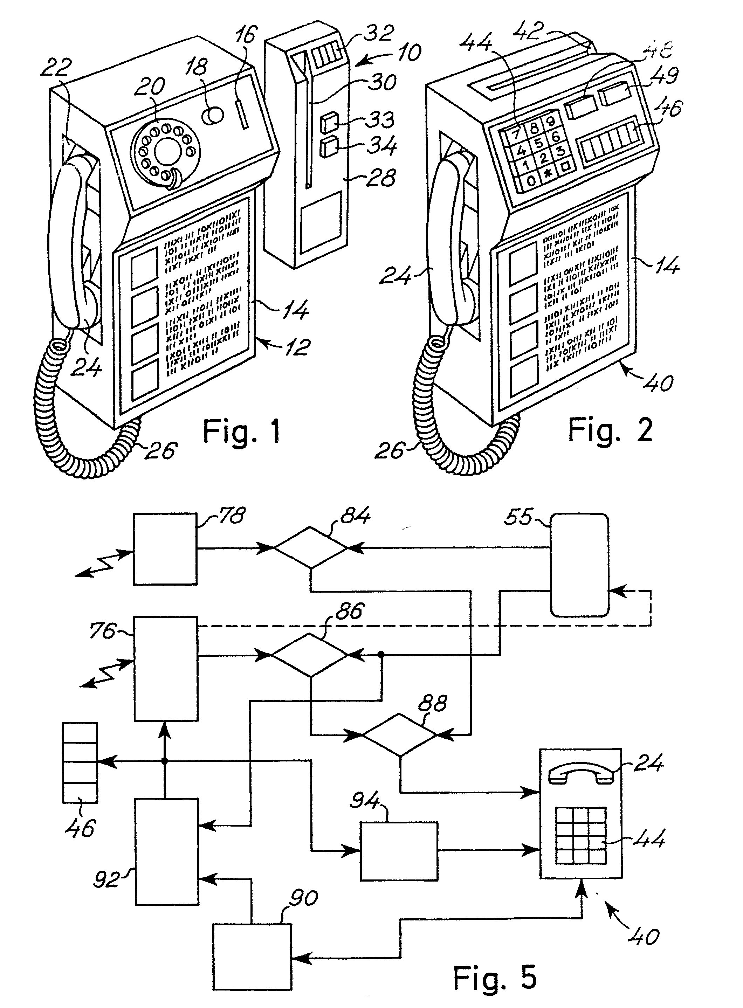

In Fig. 1, a first embodiment of the pay phone apparatus of a pay phone system according to the invention is shown. The apparatus is an auxiliary apparatus designated 10 and connected to a conventional coin operated pay phone apparatus 12. The apparatus 12 comprises a housing 14, in which a coin container (not shown in the drawing) is enclosed. On the upper front surface of the housing 14, a coin receiving slot 16 is provided together with a return pushbutton 18 and a dial means 20. In a recess 22 at the left-hand side of the housing 14, a receiver 24 is received on a hook of the apparatus including switching means for turning the apparatus into operation. The receiver 24 is connected to the housing 14 through a coiled cord 26. On the lower front surface of the house 14, a plate informs an operator how to use the telephone apparatus.

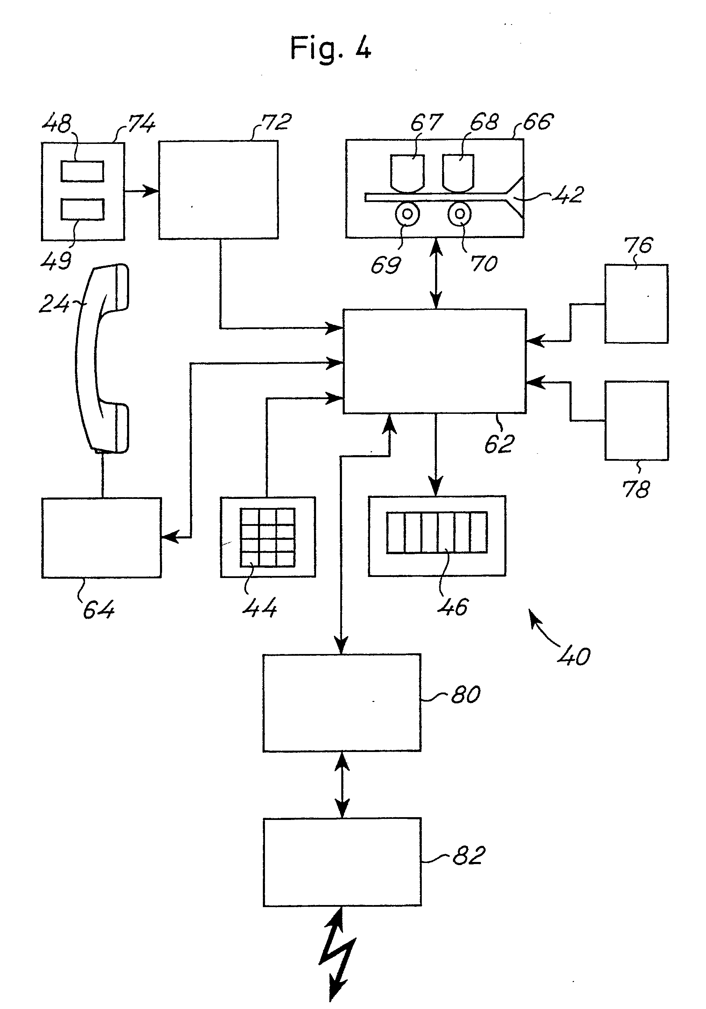

The auxiliary apparatus 10 comprises a housing 28 and is operated by means of a magnetic card which is received in a magnetic card receiving slit 30 on the front surface of the apparatus housing 24. The auxiliary apparatus 10 further comprises a display 32 arranged at the upper end of the front surface of the housing 28 and further two manually operable buttons 33 and 34 serving the purpose of switching the pay phone apparatus assembly comprising the auxiliary apparatus 10 and the coin operated pay phone apparatus 12 into an operational mode in which the telephone call is paid for by the telephone subscriber to whom the telephone call is addressed. This mode of receiving telephone subscriber paying the telephone call is to be described in greater detail below with reference to Fig. 4.

In Fig. 2 a presently preferred embodiment of a pay phone apparatus of a pay phone system according to the present invention is shown. The pay telephone apparatus is designated 40 in its entirety and comprises the above housing 14 and the receiver 24 received in the recess 22 of the housing 14 and further connected through the cord 26 to the housing 14. Instead of the coin receiving slot 16, the dial means 20 and the return pushbutton 18, the embodiment shown in Fig. 2 comprises a card receiving slit 42 basically identical to the slit 30 shown in Fig. 1, a keyboard dial means 44, a display 46 basically corresponding to the display 32 shown in Fig. 1 and two pushbuttons 48 and 49 basically corresponding to the pushbuttons 33 and 34 shown in Fig. 1. The operation of the apparatus 40 will be evident from the detailed description below with reference to Fig. 4.

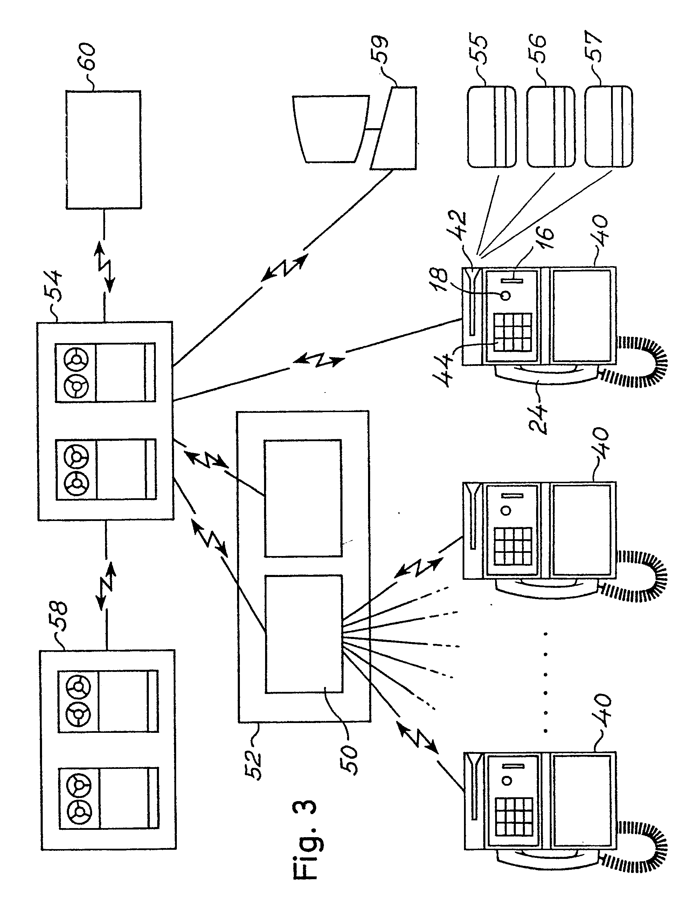

In Fig. 3, a schematical view of a pay phone system according to the present invention is shown. The system comprises a number of pay phone apparatuses 40, e.g. of the type shown in Fig. 2, which are connected through telephone lines to a local computer 50, e.g. at the telephone central 52, and which are further connected to a remote central computer 54, to which one of the pay phone apparatuses 40 is connected directly. The pay phone apparatuses 40 are operated by means of magnetic cards 55, 56, and 57, preferably of the kind described in Applicants' co-pending PCT-application PCT/DK84/00118 and basically conform to ISO Standard 2894. Apart from the magnetic cards issued by the telephone company, the pay telephone apparatuses 40 may be operated by means of a magnetic card issued by a credit card organisation. In Fig. 3, a computer system of a first credit card organisation is shown at 58 and a second computer system of a second credit card organisation is shown at 60. The remote central computer 54 further communicates through a telephone line with a terminal 59, e.g. a terminal at a telephone shop.

A telephone apparatus 40 (at the lower right-hand side of Fig. 3) which communicates with the remote central computer 54 directly, includes a storage means as will be described in greater detail below with reference to Figs. 4 and 5, and which is addressed from the remote central computer 54 and includes data identifying legal magnetic cards and illegal magnetic cards.

When a magnetic card, e.g. the card 55 shown in Fig. 3 is input into the magnetic card receiving slit 42 of the pay phone apparatus 40, the data stored in the magnetic strip on the card is read from the card and input to a storage means of the pay phone apparatus. The data read from the magnetic card and the data transferred from the remote central computer 54 to the above storage means of the pay phone apparatus are compared, and on the basis of the comparison, the card is identified as a legal card, or alternatively, as an illegal card, and it is further checked if the amount represented by data read from the card and representing a maximum telephone call duration is different from zero and has not been altered to a value exceeding the value written in the magnetic card at the conclusion of the preceding telephone call paid for by means of the card in question. Provided the card is identified as a legal card and further a card allowing for a telephone call in that the amount is different from zero and has not been altered to a higher value, the pay phone apparatus is enabled for a telephone call, and the operator is through the display means 46 of the apparatus, *vide* Fig. 2, invited to input a telephone number by means of the keyboard dial means 44. Provided the total amount read from the card 55 is not reduced to zero during the telephone call, the reduced amount is written in the card at the conclusion of the telephone call prior to the returning of the card to the operator from the magnetic card receivng slit 42.

The reduced amount of the card is stored in the apparatus and at a later time transferred to the remote central computer 54, in which the data are processed, the data are cross-checked relative to data input from other pay phone apparatuses and from local computers such as the local computer 50, and on the basis of the data processing in the remote central computer 54, any illegal cards i.e. cards which have been altered or otherwise tampered with are identified, and data identifying these cards are output from the remote central computer 54 to the storage means of the individual pay phone apparatus 40.

The pay phone apparatuses at the left handside of Fig. 3 are connected to a local computer 50, which includes the storage means which is addressed from the remote central computer 54 and includes data identifying legal and illegal cards, and further the storage means into which the data read from the cards 55-57 are stored, together with the comparison block in which the data read from the card and the data previously supplied from the remote central computer 54 are compared to one another in order to identify the card in question as a legal or as an illegal card.

In case a card issued by a credit card organisation, e.g. the credit card organisation running the computer system 58, is input to the pay phone apparatus 40, the data read from the card identifies the card as a credit card, and the pay phone apparatus addresses the remote central computer 54, which further addresses the credit card computer system in which the authenticity of the card is verified. Provided the authenticity of the card issued by the credit card organization is verified, the pay phone apparatus 40 is enabled for a telephone call, i.e. the operator is invited to input a telephone number by means of the keyboard dial means 44 as discussed above. The data read from the card issued by the credit card organization is stored in the pay phone apparatus together with the amount representing the telephone call duration and at a later time when the data stored in the pay phone apparatus are transferred to the remote central computer 54, and further transferred therefrom to the computer system 50 so as to debit the telephone call to the credit card account corresponding to the credit card employed for the telephone call. The remote central computer 54 may be adapted to automatically limit the duration of the telephone call to a predetermined value.

The terminal 59 renders it possible to check the history of a particular card by addressing the remote central computer 54 in order to check a complaint regarding a magnetic card.

In Fig. 4, a block diagram of the pay phone apparatus 40 is shown. The apparatus comprises centrally a microprocessor 62, which controls the overall operation of the apparatus and is connected to the individual block of the apparatus to be described below. The microprocessor 62 is connected to the keyboard dial means 44, the display 46 and an audio-circuit block 64, to which the receiver 24 is connected. The microprocessor 62 is further connected to a magnetic reading and writing block 66 including the magnetic card receiving slit 42, a magnetic reading head 67, a magnetic writing head 68 and magnetic card advancing pulleys 69 and 70 which may be idler or drive pulleys or combined idler and drive pulleys. The microprocessor 62 is also connected to a voice generator block 72, which is further connected to a block 74 including the pushbuttons 48 and 49, which activate switches of the block 74. Furthermore, the microprocessor 62 is connected to a first store 76, into which data read from a card by means of the magnetic reading head 67 are input through the microprocessor 62, and further to a second store 78, into which data identifying legal and illegal parts are input from the remote central computer 54 shown in Fig. 3 through an input/output interface block 82 connected to a telephone line and further through an encryption/decryption block 80. Alternatively, a decryption block may be included in the microprocessor 62 so that data transferred from the remote central computer 54 shown in Fig. 3 to the second store 78 of the pay phone apparatus 40 are in an encrypted state and so that the data read from the magnetic card or cards, e.g. the cards 55, 56 and 57 shown in Fig. 3 are further in an encrypted state and are stored in the first store 76 in an encrypted state. Consequently, a criminal who attempts to disclose the inherent information stored in the stores 76 and 78 by tampering with the pay phone apparatus 40 is not able to obtain any relevant information regarding the pay phone system as the data stored in the stores 76 and 78 are in an encrypted state. As will be appreciated, the data transferred to and from the individual blocks of the apparatus, i.e. to and from the reading and writing block 66 and to and from the stores 76 and 78 and further transferred to the apparatus or from the apparatus through the telephone line are in an encrypted state. Within the microprocessor 62, the data are disclosed in a plain text exclusively.

In the normal operational mode of the apparatus, data read from cards received in the magnetic card receiving slit 42 are input to the first store 76 and stored therein and further compared to data stored in the second store 78 and representing legal and illegal cards. On the basis of the comparison, it is determined whether the card is a legal card or not. Provided the card is identified as a legal card and the amount allowing for a telephone call and read from the card is an amount larger than zero, the pay phone apparatus is enabled for a telephone call. The operator is informed by means of the display 46 to input a telephone number by means of a keyboard dial means 44. The telephone number dialled is displayed on the display 46 and as the connection is established, the display 46 is switched into displaying the amount allowing for the telephone call. The amount is gradually reduced, and the reduced amount is displayed to the operator on the display 46. At the conclusion of a telephone call, the reduced amount is written into the magnetic card by means of the writing head 68 of the block 66. In case the amount is reduced to zero prior to the conclusion of the telephone call, the pay phone apparatus automatically interrupts the telephone call, and the recuced amount, i.e. the amount zero is written into the magnetic card, which is consequently converted into a valueless card.

In an alternative operational mode, the operator activates one of the pushbuttons 48 and 49, which further activates the voice generator block 72 and the microprocessor 62 and converts the apparatus into an operational mode, in which the telephone call is to be debited to the telephone subscriber receiving the telephone call. Having activated the pushbutton in question, i.e. one of the pushbuttons 48 and 49, the operator is invited to dial the telephone number by means of the keyboard dial means 44 the telephone number being stored in the first store 76, and as the connection has been established, the voice generator block 72 outputs an audio signal to the telephone line asking the telephone subscriber receiving the telephone call, if he will accept to pay for the telephone call. If the telephone subscriber is willing to accept to pay for the telephone call, he activates the dial means of his telephone apparatus in a prescribed manner, i.e. he dials a number asked for by the signal generated by the voice generator block 72 by means of the dial means of his telephone apparatus in order to generate a sequence of a tone burst signals which are supplied through the telephone line to the pay phone apparatus. The amount representing the telephone call duration is also stored in the first store 76 and at a later time, when the data of the store 76 are transferred to the remote central computer 54, debited the account of the telephone subscriber.

In Fig. 5, the verification routine carried out in the pay phone apparatus 40 or alternatively in the auxiliary apparatus 10 connected to the conventional coin operated pay phone apparatus is illustrated in a route diagram. Data read from the card 55 identifying the card, e.g. by its number or the like, are compared to data output from the store 78 in a verification block 84. Data read from the card 55 and representing an amount allowing for a telephone call are compared to data output from the store 76 in a further verification block 86. Provided the verification blocks 84 and 86 identify the card 55 as a legal and not totally consumed card, respectively, a further logical decision block 88 enables the pay phone apparatus for a telephone call.

As described above, the operator is invited to dial a telephone number by means of the keyboard dial means 44. The keyboard dial means 44 further activates a debiting pulse generator block 90, which supplies debiting pulses to an arithmetic block 92, which further receives the amount read from the card 55 and reduces the amount in response to the debiting pulses supplied from the debiting pulse generator block 90.

The actual or reduced amount is displayed on the display 46 and input to the store 76 and further supplied to the block 94, which is adapted to interrupt the telephone conversation as the amount is reduced below a predetermined threshold, such as a zero threshold. At the conclusion of the telephone call, the store 76 outputs the reduced amount to the magnetic writing head 68 shown in Fig. 4 by means of which the amount is written in the card 55. Through the telephone line connected to the telephone exchange and also to the remote central computer 54 shown in Fig. 3, the data stored in the store 76 are output to the remote central computer at an appropriate time, e.g. by night, and in the remote central computer, the data are processed as described above, and the data stored in the store 78 and identifying legal and illegal cards are updated in response to the processing of the data in the remote central computer.

In the description above, an integral pay phone apparatus has been described. In the embodiment shown in the lower left-hand side of Fig. 3, the store 76, the store 78, the verification block 84, the verification block 86, the logical decision block 88 and the microprocessor 62 controlling the overall operation of the apparatus are housed in the local computer 50.

In a further alternative embodiment, a number of pay phone apparatuses of the type shown in the lower right-hand side of Fig. 3 may commonly comprise the above identified controlling, storing and dicision blocks, e.g. in applications in which a number of pay phone apparatuses are arranged in adjacent telephone booths, e.g. at railway stations, airports, etc.

Although the concept of making the telephone subscriber pay for the telephone call has been described in connection with the pay phone apparatus of the pay phone system according to the invention, it is, however, believed that the receiving subscriber paying principle may be adapted to other telephone apparatuses such as conventional telephone subscriber apparatuses and is a universially applicable debiting principle.

## Claims

1. A pay service system comprising at least one pay service apparatus and a remote central computer, the pay service apparatus communicating with the central computer through a transmission line, the pay service apparatus being operated by means of a token including data readable from the token and identifying the token and further representing an amount corresponding to an allowable service performance; the pay service apparatus comprising:
   a means for receiving the token,
   a reading means for reading said readable data from the token received in the token receiving means,
   a writing means for writing data in the token,
   a first storage means connected to the reading means for storing data read from the token by the reading means, and further being connectable to the transmission line for transferring data to the remote central computer through the transmission line,

a second storage means adressable from the remote central computer through the transmission line and for storing data transferred therefrom,

a comparator means connected to the first storage means and the second storage means for comparing the data stored in the first storage means with the data stored in the second storage means so as to identify the token as a legal token, or alternatively, as an illegal token and further for generating an accept signal in order to enable the pay service apparatus for a service performance, provided the token is identified as a legal token, or alternatively, for generating and supplying a reject signal to the receiving means, provided the token is identified as an illegal token, in order to make the receiving means reject the token, said accept signal, or alternatively, said reject signal being stored in the first storage means,

a debiting means for generating a signal representing a debiting amount corresponding to the duration of a service performance,

a subtraction means connected to the first storage means and the debiting means and for subtracting the debiting signal from said amount represented by the data read from the token so as to reduce the amount, the reduced amount being stored in first storage means and further being output to the writing means and written in the said token by the writing means at the conclusion of the service performance, and

a gate means connected to the subtraction means and being supplied with said reduced amount during the service performance and for comparing the reduced amount and a predetermined threshold in order to interrupt the service performance when the reduced amount falls below said predetermined threshold;

the pay service apparatus being adapted to output data stored in the first storage means to the transmission line for transferring the data to the remote central computer for storing or processing therein after the conclusion of the service performance; and

the remote central computer being adapted to transfer data identifying legal tokens and data identifying illegal tokens to the second storage means of the pay service apparatus through the transmission line when the pay service apparatus is not in operation.

2. A pay service system according to claim 1, the pay service apparatus being a pay phone apparatus, the transmission line being a telephone line, and the service performance being a telephone call, the pay phone apparatus communicating with a telephone central exchange through the telephone line.

3. A pay service system according to claim 2, a number of pay phone apparatuses commonly comprising the first storage means, the second storage means, and the comparator means.

4. A pay service system according to claim 1, the pay service apparatus being a pay phone apparatus, the system further comprising a local computer, the pay phone apparatus communicating with a telephone central exchange and the local computer through a telephone line and further with the central computer through a data transmission line or a further telephone line, the service performance being a telephone call:

the reading means being connectable to the telephone line for transferring data to the local computer through the telephone line,

the writing means being connectable to the telephone line for receiving data from the local computer through the telephone line,

the first storage means, the second storage menas and the comparator means being inculded in the local computer,

the local computer being adapted to output data stored in the first storage means to the data transmission line or the further telephone line for transferring data to the remote central computer for storing or processing therein.

5. A pay service system according to claim 4, the local computer being assigned to a plurality of pay phone apparatuses.

6. A pay service system according to any of the claims 2-5, the pay phone apparatus further being adapted to be operated by means of a different token representing a credit token and being receivable in the receiving means of the pay phone apparatus and further including data readable from the token and identifying the token, the remote central computer being connected to or being connectable with a further computer of a credit organisation;

the comparator means further being adapted to identify the token as a credit token on the basis of the comparision of the data stored in the first storage means with the data stored in the second storage means and to address the first storage means so as to make the first storage means output the data stored therein to the telephone line for transferring the data to the remote central computer, provided the token has been identified as a credit token;
the remote central computer further being adapted to address the further computer of the credit organisation when receiving data from the pay phone apparatus regarding the credit token and to transfer the data to the further computer in order to have the further computer verify the authenticity of the credit token, and, provided the credit token has been verified as a legal credit token by the further computer, to enable the pay phone apparatus for a telephone call; and the pay phone apparatus further being adaped to output the debiting signal generated by the debiting means during the telephone call to the telephone line for transferring therethrough to the central computer when enabled remotely;
and the remote central computer further being adapted to transfer the debiting signal received from the pay phone apparatus to the further computer.

7. A pay service system according to any of the claims 2-6,
the pay phone apparatus further comprising a dial means including manually operable switch means for generating a sequence of tone burst signals and for supplying the sequence to the telephone central exchange through the telephone line for addressing selector means of the telephone central exchange.

8. A pay service system according to claim 7,
the pay phone apparatus further comprising a further manually operable switch means and a voice generator means, the further manually operable switch means being connected to the voice generator means and adapted to activate the latter, the first storage means further being adapted to store the sequence of tone burst signals generated by means of the manually operable switch means of the dial means, the voice generator means being adapted to generate a request signal and being connectable to the telephone line so as to generate and supply the request signal to the telephone line when activated by the further manually operable switch means, the request signal being further transmitted to the telephone subscriber addressed by the sequence of tone burst signals generated by means of the manually operable switch means of the dial means, and the pay phone apparatus further being adapted to be enabled for the telephone call by an accept signal supplied to the pay phone apparatus from the telephone subscriber apparatus in response to the request signal.

9. A pay service system according to any of the claims 2-8,
the pay phone apparatus further comprising a receiver means including at least two electro-acoustic transducers one of which is adapted to convert acoustic energy into electric energy and to supply said acoustic energy to the telephone line when the pay phone apparatus is in operation, and another one of which is adapted to receive electric energy from the telephone line and convert the electric energy into acoustic energy, when the pay phone apparatus is in operation.

10. A pay service system according to any of the claims 2-9, the first storage means and the second storage means of the pay phone apparatus being constituted by first and second parts, respectively, of a single storage means.

11. A pay service system according to any of the claims 2-10, the first storage means of the pay phone apparatus being constituted by a volatile store, and a second storage means of the pay phone apparatus being constituted by the non-volatile store.

12. A pay service system according to any of the claims 2-11, the pay phone apparatus further comprising a central control means controlling the overall operation of the apparatus.

13. A pay service system according to claim 12, the central control means of the pay phone apparatus being constituted by a micro computer means.

14. A pay service system according to any of the claims 2-13, the pay phone system further comprising encryption and decryption means, an encryption means being interconnected between the first storage means and the telephone line and a decryption means being interconnected between the telephone line and the second storage means, for supplying the data output from the first storage means to the telephone line in an encrypted state, and for decrypting the data transferred from the remote central computer to the second storage means from an encrypted state to a decrypted state, respectively.

15. A pay service system according to any of the claims 2-14, the pay phone apparatus further comprising a display means connected to the comparator means, to the subtraction means and to the gate means for displaying information corresponding to the accept signal, or alternatively, the reject signal supplied from the comparator means, for displaying said amount supplied from the subtraction means, and further for displaying information supplied from the gate means.

16. A pay service system according to any of the claims 2-15, the token being a card having a strip of a magnetic material arranged at one side surface of the card, the reading and writing means of the pay phone apparatus being magnetic reading and writing means, respectively.

17. A pay phone apparatus in a pay service system according to claim 2 and comprising:
the means for receiving the token,
the reading means,
the writing means,
the first storage means,
the second storage means,
the debiting means,
the subtraction means, and
the gate means of the pay phone apparatus of the pay service system according to claim 2.

18. A pay phone apparatus in a pay service system according to claim 4 and comprising:
the means for receiving the token,
the reading means,
the writing means,
the debiting means,
the subtraction means, and
the gate means of the pay phone apparatus of the pay service system according to claim 4.

19. A pay phone apparatus according to any of the claims 17 or 18, the pay phone apparatus further being adapted to be operated by means of a different token representing a credit token and being receivable in the receiving means of the pay phone apparatus and further including data readable from the token and identifying the token, the remote central computer being connected to or being connectable with a further computer of a credit organisation;
the comparator means further being adapted to identify the token as a credit token on the basis of the comparision of the data stored in the first storage means with the data stored in the second storage means and to address the first storage means so as to make the first storage means output the data stored therein to the telephone line for transferring the data to the remote central computer, provided the token has been identified as a credit token.

20. A pay phone apparatus according to any of the claims 17-19,
the pay phone apparatus further comprising a dial means including manually operable switch means for generating a sequence of tone burst signals and for supplying the sequence to the telephone central exchange through the telephone line for addressing selector means of the telephone central exchange.

21. A pay phone apparatus according to claim 20,
the pay phone apparatus further comprising a further manually operable switch means and a voice generator means, the further manually operable switch means being connected to the voice generator means and adapted to activate the latter, the first storage means further being adapted to store the sequence of tone burst signals generated by means of the manually operable switch means of the dial means, the voice generator means being adapted to generate a request signal and being connectable to the telephone line so as to generate and supply the request signal to the telephone line when activated by the further manually operable switch means, the request signal being further transmitted to the telephone subscriber addressed by the sequence of tone burst signals generated by means of the manually operable switch means of the dial means, and the pay phone apparatus further being adapted to be enabled for the telephone call by an accept signal supplied to the pay phone apparatus from the telephone subscriber apparatus in response to the request signal.

22. A pay phone apparatus according to any of the claims 17-21,
the pay phone apparatus further comprising a receiver means including at least two electro-acoustic transducers one of which is adapted to convert acoustic energy into electric energy and to supply said acoustic energy to the telephone line when the pay phone apparatus is in operation, and another one of which is adapted to receive electric energy from the telephone line and convert the electric energy into acoustic energy, when the pay phone apparatus is in operation.

23. A pay phone apparatus according to any of the claims 17 or 19-22, the first storage means and the second storage means of the pay phone apparatus being constituted by first and second parts, respectively, of a single storage means.

24. A pay phone apparatus according to any of the claims 17 or 19-23, the first storage means of the pay phone apparatus being constituted by a volatile store, and a second storage means of the pay phone apparatus being constituted by the non-volatile store.

25. A pay phone apparatus according to any of the claims 16-24, the pay phone apparatus further comprising a central control means controlling the overall operation of the apparatus.

26. A pay phone apparatus according to claim 25, the central control means of the pay phone apparatus being constituted by a micro computer means.

27. A pay phone apparatus according to any of the claims 17 or 19-25, the pay phone apparatus further comprising encryption and decryption means, an encryption means being interconnected between the first storage means and the telephone line and a decryption means being interconnected between the telephone line and the second storage means, for supplying the data output from the first storage means to the telephone line in an encrypted state, and for decrypting the data transferred from the remote central computer to the second storage means from an encrypted state to a decrypted state, respectively.

28. A pay phone apparatus according to any of the claims 17-27, the pay phone apparatus further comprising a display means connected to the comparator means, to the subtraction means and to the gate means for displaying information corresponding to the accept signal, or alternatively, the reject signal supplied from the comparator means, for displaying said amount supplied from the subtraction means, and further for displaying information supplied from the gate means.

29. A pay phone apparatus according to any of the claims 17-28, the token being a card having a strip of a magnetic material arranged at one side surface of the card, the reading and writing means of the pay phone apparatus being magnetic reading and writing means, respectively.

30. A local computer in a pay service system according to claim 4 and comprising:
the first storage means,
the second storage means,
the comparator means of the local computer of the pay service system according to claim 4.

31. A local computer according to claim 30, the local computer being assigned to a plurality of pay phone apparatuses.

## Revendications

1. Un système de service à paiement, comprenant au moins un appareil de service à paiement et un ordinateur central à distance, l'appareil de service à paiement communiquant avec l'ordinateur central par l'intermédiaire d'une ligne de transmission, l'appareil de service à paiement étant mis en oeuvre au moyen d'un jeton comprenant des données, lisibles sur le jeton et identifiant le jeton, et représentant en outre une valeur correspondant à l'exécution d'un service qui peut être autorisée; l'appareil de service à paiement comprenant:
un moyen pour recevoir le jeton,
un moyen de lecture pour lire lesdites données lisibles sur le jeton reçu dans le moyen récepteur de jeton,
un moyen d'écriture pour écrire les données sur le jeton,
un premier moyen de mémorisation relié au moyen de lecture pour mémoriser des données lues sur le jeton par les moyens de lecture, et pouvant en outre être relié à la ligne de transmission pour transférer des données d l'ordinateur central à distance par l'intermédiaire de la ligne de transmission,
un deuxième moyen de mémorisation qui peut être adressé, par l'intermédiaire de la ligne de transmission, à partir de l'ordinateur central à distance et qui est destiné à mémoriser des données transférées depuis ce dernier,
un moyen comparateur relié au premier moyen de mémorisation et au deuxième moyen de mémorisation pour comparer les données mémorisées dans le premier moyen de mémorisation avec les données mémorisées dans le deuxième moyen de mémorisation de façon à identifier le jeton en tant que jeton légal, ou, en variante, en tant que jeton illégal et pour engendrer en outre un signal d'acceptation pour valider l'appareil de service à paiement en vue de l'exécution d'un service, pourvu que le jeton soit identifié en tant que jeton légal ou, en variante, pour engendrer et envoyer un signal de rejet au moyen récepteur, pourvu que le jeton soit identifié en tant que jeton illégal, afin d'amener le moyen récepteur à rejeter le jeton, ledit signal d'acceptation ou, en variante, ledit signal de rejet étant mémorisé dans le premier moyen de mémorisation,
un moyen de débit pour engendrer un signal représentant une valeur à débiter correspondant à la durée de l'exécution d'un service,
un moyen de soustraction relié au premier moyen de mémorisation et au moyen de débit et destiné à soustraire, de ladite valeur représentée par les données lues sur le jeton, le signal de débit de façon à réduire la valeur, la valeur réduite étant mémorisée dans le premier moyen de mémorisation et étant en outre envoyée au moyen d'écriture et écrit dans ledit jeton par le moyen d'écriture à la conclusion de l'exécution du service, et
un moyen de porte relié au moyen de soustraction et recevant ladite valeur réduite pendant l'exécution du service et destiné à comparer la valeur réduite et un seuil prédéterminé afin d'interrompre l'exécution du service lorsque la valeur réduite tombe au-dessous dudit seuil prédéterminé;
l'appareil de service à paiement étant apte à envoyer à la ligne de transmission des données mémorisées dans le premier moyen de mémorisation pour transférer les données à l'ordinateur central à distance en vue d'une mémorisation ou d'un traitement dans celui-ci après la conclusion de l'exécution du service; et
l'ordinateur central à distance étant apte à transférer des données identifiant des jetons légaux et des données identifiant des jetons illégaux au deuxième moyen de mémorisation de l'appareil de service à paiement par l'intermédiaire de la ligne de transmission lorsque l'appareil de service à paiement n'est pas en fonctionnement.

2. Un système de service à paiement selon la revendication 1, l'appareil de service à paiement étant un appareil téléphonique à paiement, la ligne de transmission étant une ligne téléphonique, et l'exécution du service étant un appel téléphonique, l'appareil téléphonique à paiement communiquant avec un standard téléphonique par l'intermédiaire de la ligne téléphonique.

3. Un système de service à paiement selon la revendication 2, plusieurs appareils téléphoniques à paiement comprenant en commun le premier moyen de mémorisation, le deuxième moyen de mémorisation et le moyen comparateur.

4. Un système de service à paiement selon la revendication 1, l'appareil de service à paiement étant un appareil téléphonique à paiement, le système comprenant en outre un ordinateur local, l'appareil téléphonique à paiement communiquant avec un standard téléphonique et avec l'ordinateur local par l'intermédiaire d'une ligne téléphonique et, en outre, avec l'ordinateur central à l'aide d'une ligne de transmission de données ou d'une autre ligne téléphonique, l'exécution du service étant un appel téléphonique;
le moyen de lecture pouvant être relié à la ligne téléphonique pour transférer des données à l'ordinateur local par l'intermédiaire de la ligne téléphonique,
le moyen d'écriture pouvant être relié à la ligne téléphonique pour recevoir des données depuis l'ordinateur local par l'intermédiaire de la ligne téléphonique,
le premier moyen de mémorisation, le deuxième moyen de mémorisation et le moyen comparateur étant inclus dans l'ordinateur local,
l'ordinateur local étant apte à envoyer, vers la ligne de transmission de données ou l'autre ligne téléphonique des données mémorisées dans le premier moyen de mémorisation pour transférer des données vers l'ordinateur central à distance en vue d'une mémorisation ou d'un traitement dans ce dernier.

5. Un système de service à paiement selon la revendication 4, l'ordinateur local étant affecté à plusieurs appareils téléphoniques à paiement.

6. Un système de service à paiement selon l'une quelconque des revendications 2 à 5, l'appareil téléphonique à paiement étant en outre apte à être mis en oeuvre au moyen d'un jeton différent, représentant un jeton de crédit et recevable dans le moyen récepteur de l'appareil téléphonique à paiement et comprenant en outre des données qui peuvent être lues dans le jeton et identifiant le jeton, l'ordinateur central à distance étant relié ou pouvant être relié à un ordinateur additionnel d'une organisation de crédit;
le moyen comparateur étant en outre apte à identifier le jeton en tant que jeton de crédit sur la base de la comparaison des données mémorisées dans le premier moyen de mémorisation avec les données mémorisées dans le deuxième moyen de mémorisation et à adresser le premier moyen de mémorisation de façon à amener le premier moyen de mémorisation à envoyer à la ligne téléphonique les données qui y sont mémorisées en vue d'un transfert des données vers l'ordinateur central à distance, pourvu que le jeton ait été identifié en tant que jeton de crédit;
l'ordinateur central à distance étant en outre apte à adresser l'ordinateur additionnel de l'organisation de crédit lorsqu'il reçoit des données provenant de l'appareil téléphonique à paiement concernant le jeton de crédit et pour transférer les données à l'ordinateur additionnel afin d'amener l'ordinateur additionnel à vérifier l'authenticité du jeton de crédit et, pourvu que le jeton de crédit ait été vérifié en tant que jeton de crédit légal par l'ordinateur additionnel, à valider l'appareil téléphonique à paiement en vu d'un appel téléphonique; et l'appareil téléphonique à paiement étant en outre apte à envoyer à la ligne téléphonique, en vu d'un transfert par l'intermédiaire de celle-ci à l'ordinateur central en cas de validation à distance, le signal de débit engendré par le moyen de débit pendant l'appel téléphonique; et l'ordinateur central à distance étant en outre apte à transférer à l'ordinateur additionnel le signal de débit reçu depuis l'appareil téléphonique à paiement.

7. Un système de service à paiement selon l'une quelconque des revendications 2 à 6, l'appareil téléphonique à paiement comprenant en outre un moyen de cadran incluant des moyens commutateurs à mettre en oeuvre manuellement pour engendrer une séquence de signaux de paquets de tonalités et pour envoyer la séquence au standard téléphonique par l'intermédiaire de la ligne téléphonique pour adresser des moyens sélecteurs du standard téléphonique.

8. Un système de service à paiement selon la revendication 7, l'appareil téléphonique à paiement comprenant en outre un autre moyen de commutateur à manoeuvrer à la main et un moyen générateur de voix, l'autre moyen commutateur à manoeuvre manuellement étant relié au moyen générateur de voie et apte à activer ce dernier, le premier moyen de mémorisation étant en outre apte à mémoriser la séquence de signaux de paquets de tonalités, engendrée à l'aide du moyen de commutateur à manoeuvrer à la main du moyen du cadran, le moyen générateur de voie étant apte à engendrer un signal de demande et pouvant être relié à la ligne téléphonique de façon à engendrer et à envoyer à la ligne téléphonique le signal de demande lorsqu'il est activé par l'autre moyen de commutateur à manoeuvrer manuellement, le signal de demande étant en outre envoyé à l'abonné téléphonique auquel est adressé la séquence de signaux de paquets de tonalités engendrée au moyen du moyen commutateur à manoeuvrer à la main du moyen de cadran, et l'appareil téléphonique à paiement étant en outre apte à être validé pour l'appel téléphonique par un signal d'acceptation fourni à l'appareil téléphonique à paiement à partir de l'appareil de l'abonné téléphonique en réponse au signal de demande.

9. Un système de service à paiement selon l'une quelconque des revendications 2 à 8, l'appareil téléphonique à paiement comprenant en outre un moyen récepteur incluant au moins deux transducteurs électro-acoustiques dont l'un est apte à convertir l'énergie acoustique en énergie électrique et envoyer ladite énergie acoustique à la ligne téléphonique lorsque l'appareil téléphonique à paiement est en fonctionnement, et dont un autre est adapté à recevoir l'énergie électrique provenant de la ligne téléphonique et à convertir l'énergie électrique en énergie acoustique, lorsque l'appareil téléphonique à paiement est en fonctionnement.

10. Un système de service à paiement selon l'une quelconque des revendications 2 à 9, le premier moyen de mémorisation et le deuxième moyen de mémorisation de l'appareil téléphonique à paiement étant constitués par un premier et un deuxième éléments, respectivement, d'un moyen de mémorisation unique.

11. Un système de service à paiement selon l'une quelconque des revendications 2 à 10, le premier moyen de mémorisation de l'appareil téléphonique à paiement étant constitué par une mémoire volatile, et un deuxième moyen de mémorisation de l'appareil téléphonique à paiement étant constitué par la mémoire non volatile.

12. Un système de service à paiement selon l'une quelconque des revendications 2 à 11, l'appareil téléphonique à paiement comprenant en outre un moyen central de commande commandant le fonctionnement d'ensemble de l'appareil.

13. Un système de service à paiement selon la revendication 12, le moyen central de commande de l'appareil téléphonique à paiement étant constitué par un moyen de micro-ordinateur.

14. Un système de service à paiement selon l'une quelconque des revendications 2 à 13 le système téléphonique à paiement comprenant en outre des moyens de chiffrement et de déchiffrement, un moyen de chiffrement étant interconnecté entre le premier moyen de mémorisation et la ligne téléphonique et un moyen de déchiffrement étant interconnecté entre la ligne téléphonique et le deuxième moyen de mémorisation, pour fournir à la ligne téléphonique sous une forme chiffrée des données envoyées par le premier moyen de mémorisation, et pour déchiffrer, depuis un état chiffré vers un état déchiffré, les données transférées depuis l'ordinateur central à distance vers le deuxième moyen de mémorisation respectivement.

15. Un système de service à paiement selon l'une quelconque des revendications 2 à 14, l'appareil téléphonique à paiement comprenant en outre un moyen d'affichage relié au moyen comparateur, au moyen soustracteur et au moyen de porte pour afficher l'information correspondant au signal d'acceptation ou, en variante, au signal de rejet, fourni par le moyen comparateur afin d'afficher ladite valeur fournie par le moyen soustracteur et pour afficher en outre une information fournie par le moyen de porte.

16. Un système de service à paiement selon l'une quelconque des revendications 2 à 15, le jeton étant une carte portant une bande de matière magnétique agencée sur une surface de côté de la carte, les moyens de lecture et d'écriture de l'appareil téléphonique à paiement étant des moyens de lecture et d'écriture magnétiques, respectivement.

17. Un appareil téléphonique à paiement dans un système de service à paiement selon la revendication 2 et comprenant:
le moyen de recevoir le jeton,
le moyen de lecture,
le moyen d'écriture,
le premier moyen de mémorisation,
le deuxième moyen de mémorisation,
le moyen de débit,
le moyen de soustraction, et
le moyen de porte de l'appareil téléphonique à paiement du système de service à paiement selon la revendication 2.

18. Un appareil téléphonique à paiement dans un système de service à paiement selon la revendication 4 et comprenant:
le moyen récepteur du jeton,
le moyen de lecture,
le moyen d'écriture,
le moyen de débit,
le moyen de soustraction, et
le moyen de porte de l'appareil téléphonique à paiement du système de service à paiement selon la revendication 4.

19. Un appareil téléphonique à paiement selon l'une quelconque des revendications 17 ou 18, l'appareil téléphonique à paiement étant en outre apte à être mis en oeuvre au moyen d'un jeton différent, représentant un jeton de crédit et recevable dans le moyen récepteur de l'appareil téléphonique à paiement et comprenant en outre des données qui peuvent être lues dans le jeton et identifiant le jeton, l'ordinateur central à distance étant relié ou pouvant être relié à un ordinateur additionnel d'une organisation de crédit;
le moyen comparateur étant en autre apte à identifier le jeton en tant que jeton de crédit sur la base de la comparaison des données mémorisées dans le premier moyen de mémorisation avec les données mémorisées dans le deuxième moyen de mémorisation et à adresser le premier moyen de mémorisation de façon à amener le premier moyen de mémorisation à envoyer à la ligne téléphonique les données qui y sont mémorisées en vue d'un transfert des données vers l'ordinateur central à distance, pourvu que le jeton ait été identifié en tant que jeton de crédit;.

20. Un appareil téléphonique à paiement selon l'une quelconque des revendications 17 à 19, l'appareil téléphonique à paiement comprenant en outre un moyen de cadran incluant des moyens commutateurs à mettre en oeuvre manuellement pour engendrer une séquence de signaux de paquets de tonalités et pour envoyer la séquence au standard téléphonique par l'intermédiaire de la ligne téléphonique pour adresser des moyens sélecteurs du standard téléphonique.

21. Un appareil téléphonique à paiement selon la revendication 20, l'appareil téléphonique à paiement comprenant en outre un autre moyen de commutateur à manoeuvrer à la main et un moyen générateur de voix, l'autre moyen commutateur à manoeuvre manuellement étant relié au moyen générateur de voie et apte à activer ce dernier, le premier moyen de mémorisation étant en outre apte à mémoriser la séquence de signaux de paquets de tonalités, engendrée à l'aide du moyen de commutateur à manoeuvrer à la main du moyen du cadran, le moyen générateur de voie étant apte à engendrer un signal de demande et pouvant être relié à la ligne téléphonique de façon à engendrer et à envoyer à la ligne téléphonique le signal de demande lorsqu'il est activé par l'autre moyen de commutateur à manoeuvrer manuellement, le signal de demande étant en outre envoyé à l'abonné téléphonique auquel est adressé la séquence de signaux de paquets de tonalités engendrée au moyen du moyen commutateur à manoeuvrer à la main du moyen de cadran, et l'appareil téléphonique à paiement étant en outre apte à être validé pour l'appel téléphonique par un signal d'acceptation fourni à l'appareil téléphonique à paiement à partir de l'appareil de l'abonné téléphonique en réponse au signal de demande.

22. Un appareil téléphonique à paiement selon l'une quelconque des revendications 17 à 21, l'appareil téléphonique à paiement comprenant en outre un moyen récepteur incluant au moins deux transducteurs électro-acoustiques dont l'un est apte à convertir l'énergie acoustique en énergie électrique et envoyer ladite énergie acoustique à la ligne téléphonique lorsque l'appareil téléphonique à paiement est en fonctionnement, et dont un autre est adapté à recevoir l'énergie électrique provenant de la ligne téléphonique et à convertir l'énergie électrique en énergie acoustique, lorsque l'appareil téléphonique à paiement est en fonctionnement.

23. Un appareil téléphonique à paiement selon l'une quelconque des revendications 17 ou 19 à 22, le premier moyen de mémorisation et le deuxième moyen de mémorisation de l'appareil téléphonique à paiement étant constitués par un premier et un deuxième éléments respectivement d'un moyen de mémorisation unique.

24. Un appareil téléphonique à paiement selon l'une quelconque des revendications 17 ou 19 à 23, le premier moyen de mémorisation de l'appareil téléphonique à paiement étant constitué par une mémoire volatile, et un deuxième moyen de mémorisation de l'appareil téléphonique à paiement étant constitué par la mémoire non volatile.

25. Un appareil téléphonique à paiement selon l'une quelconque des revendication 16 à 20, l'appareil téléphonique à paiement comprenant en outre un moyen central de commande commandant le fonctionnement d'ensemble de l'appareil.

26. Un appareil téléphonique à paiement selon la revendication 25, le moyen central de commande de l'appareil téléphonique à paiement étant constitué par un moyen de micro-ordinateur.

27. Un appareil téléphonique à paiement selon l'une quelconque des revendications 17 ou 19 à 25, le système téléphonique à paiement comprenant en outre des moyens de chiffrement et de déchiffrement, un moyen de chiffrement étant interconnecté entre le premier moyen de mémorisation et la ligne téléphonique et un moyen de déchiffrement étant interconnecté entre la ligne téléphonique et le deuxième moyen de mémorisation, pour fournir à la ligne téléphonique sous une forme chiffrée des données envoyées par le premier moyen de mémorisation, et pour déchiffrer, depuis un état chiffré vers un état déchiffré, les données transférées depuis l'ordinateur central à distance vers le deuxième moyen de mémorisation respectivement.

28. Un appareil téléphonique à paiement selon l'une quelconque des revendications 17 à 27, l'appareil téléphonique à paiement comprenant en outre un moyen d'affichage relié au moyen comparateur, au moyen soustracteur et au moyen de porte pour afficher l'information correspondant au signal d'acceptation ou, [2]en variante, au signal de rejet, fourni par le moyen comparateur afin d'afficher ladite valeur fournie par le moyen soustracteur et pour afficher en outre une information fournie par le moyen de porte.

29. Un appareil téléphonique à paiement selon l'une quelconque des revendications 17 à 28, le jeton étant une carte portant une bande de matière magnétique agencée sur une surface de côté de la carte, les moyens de lecture et d'écriture de l'appareil téléphonique à paiement étant des moyens de lecture et d'écriture magnétiques, respectivement.

30. Un ordinateur local dans un système de service à paiement selon la revendication 4 et comprenant:
le premier moyen de mémorisation,
le deuxième moyen de mémorisation,
le moyen comparateur de l'ordinateur local du système de service à paiement selon la revendication 4.

31. Un ordinateur local selon la revendication 30, l'ordinateur local étant affecté à plusieurs appareils téléphoniques à paiement.

**Ansprüche**

1. Servicebezahlsystem, enthaltend wenigstens ein Servicebezahlgerät und einen entfernten Zentralrechner, wobei das Servicebezahlgerät mit dem Zentralrechner über eine Übertragungsleitung in Verbindung steht, das Servicebezahlgerät mittels einer Karte betätigt wird, die Daten trägt, die von der Karte ablesbar sind und die Karte identifizieren und weiterhin einen Betrag repräsentieren, der einer zulässigen Serviceausführung entspricht; wobei das Servicebezahlgerät enthält:

eine Einrichtung zum Aufnehmen der Karte,

eine Leseeinrichtung zum Lesen der lesbaren Daten von der von der Münzaufnahmeeinrichtung aufgenommenen Karte,

eine Schreibeinrichtung zum Schreiben von Daten in die Karte,

eine erste Speichereinrichtung, die mit der Leseeinrichtung verbunden ist, um Daten zu speichern, die durch die Leseeinrichtung von der Karte abgelesen wurden, und die weiterhin mit der Übertragungsleitung verbindbar ist, um Daten zu dem entfernten Zentralrechner über die Übertragungsleitung zu übertragen,

eine zweite Speichereinrichtung, die von dem entfernten Zentralrechner über die Übertragungsleitung adressierbar ist und zum Speicher von davon übertragenen Daten dient,

eine Komparatoreinrichtung, die mit der ersten Speichereinrichtung und der zweiten Speichereinrichtung verbunden ist zum Vergleichen der in der ersten Speichereinrichtung gespeicherten Daten mit den in der zweiten Speichereinrichtung gespeicherten Daten, um die Karte als eine echte Karte oder alternativ als eine unechte Karte zu identifizieren, und weiterhin zum Erzeugen eines Annahmesignals, um das Servicebezahlgerät für eine Serviceausführung zu ermächtigen, sofern die Karte als eine echte Karte identifiziert wird, oder alternativ ein Zurückweisungssignal zu erzeugen und an die Aufnahmeeinrichtung zu liefern, sofern die Karte als eine unechte Karte identifiziert wird, um die Aufnahmeeinrichtung zu veranlassen, die Karte zurückzuweisen, wobei das Annahmesignal oder alternativ das Zurückweisungssignal in der ersten Speichereinrichtung gespeichert werden,

eine Rechnungseinrichtung zum Erzeugen eines Signals, das einen Rechnungsbetrag entsprechend der Dauer der Serviceausführung repräsentiert,

eine Subtrahiereinrichtung, die mit der ersten Speichereinrichtung und der Rechnungseinrichtung verbunden ist, um das Rechnungssignal von dem Betrag abzuziehen, der durch die Daten repräsentiert wird, die von der Karte abgelesen werden, um den Betrag zu vermindern, wobei der verminderte Betrag in der ersten Speichereinrichtung gespeichert und weiterhin zu der Schreibeinrichtung ausgegeben wird und in die Karte durch die Schreibeinrichtung beim Abschluß der Serviceausführung eingeschrieben wird, und

eine Toreinrichtung, die mit der Subtrahiereinrichtung verbunden ist und mit dem verminderten Betrag während der Serviceausführung versorgt wird und die den verminderten Betrag und einen vorbestimmten Schwellenwert miteinander vergleicht, um die Serviceausführung abzubrechen, wenn der verminderte Betrag unter den vorbestimmten Schwellenwert fällt; wobei das Servicebezahlgerät dazu eingerichtet ist, Daten, die in der ersten Speichereinrichtung gespeichert sind, an die Übertragungsleitung auszugeben für die Übertragung der Daten zu dem entfernten Zentralrechner zum Speichern oder Verarbeiten darin nach Abschluß der Serviceausführung; und der entfernte Zentralrechner dazu eingerichtet ist, Daten, die echte Karten identifizieren, und Daten, die unechte Karten identifizieren, zu der zweiten Speichereinrichtung des Servicebezahlgerätes über die Übetragungsleitung zu übertragen, wenn das Servicebezahlgerät nicht in Betrieb ist.

2.  Servicebezahlsystem nach Anspruch 1, bei dem das Servicebezahlgerät ein Fernsprechbezahlgerät ist, die Übertragungsleitung eine Telefonleitung ist, die Serviceausführung ein Telefonanruf ist , das Fernsprechbezahlgerät mit einer Telefonvermittlungszentrale über die Telefonleitung in Verbindung steht.

3.  Servicebezahlsystem nach Anspruch 2, bei dem eine Anzahl von Fernsprechbezahlgeräten die erste Speichereinrichtung, die zweite Speichereinrichtung und die Komparatoreinrichtung gemeinsam haben.

4.  Servicebezahlsystem nach Anspruch 1, bei dem das Servicebezahlgerät ein Fernsprechbezahlgerät ist, das System weiterhin einen örtlichen Rechner enthält, das Fernsprechbezahlgerät mit einer Telefonvermittlungzentrale und dem örtlichen Rechner über eine Telefonleitung und weiterhin mit dem Zentralrechner über eine Datenübertragungsleitung oder eine weitere Telefonleitung in Verbindung steht, die Serviceleistung ein Telefonanruf ist; die Leseeinrichtung mit der Telefonleitung zur Übertragung von Daten zu dem örtlichen Rechner über die Telefonleitung verbindbar ist, die Schreibeinrichtung mit der Telefonleitung zur Aufnahme von Daten von dem örtlichen Rechner über die Telefonleitung verbindbar ist, die erste Speichereinrichtung, die zweite Speichereinrichtung und die Komparatoreinrichtung in dem örtlichen Rechner enthalten sind, der örtliche Rechner dazu eingerichtet ist, Daten, die in der esten Speichereinrichtung gespeichert sind, zu der Datenübertragungsleitung oder der weiteren Telefonleitung abzugeben, um Daten zu dem entfernten Zentralrechner zur Speicherung oder Verarbeitung darin zu übertragen.

5. Servicebezahlsystem nach Anspruch 4, bei dem der örtliche Rechner mehreren Fernsprechbezahlgeräten zugeordnet ist.

6. Servicebezahlsystem nach einem der Ansprüche 2 bis 5, bei dem das Fernsprechbezahlgerät weiterhin dazu eingerichtet ist, mittels einer anderen Karte betrieben zu werden, die eine Kreditkarte darstellt und die in der Aufnahmeeinrichtung des Fernsprechbezahlgerätes aufnehmbar ist, und weiterhin Daten trägt, die von der Karte ablesbar sind und die Wertmarke identifizieren, wobei der entfernte Zentralrechner mit einem weiteren Rechner einer Kreditorganisation verbunden oder verbindbar ist; · wobei die Komparatoreinrichtung weiterhin dazu eingerichtet ist, die Karte als eine Kreditkarte auf der Grundlage des Vergleichs der in der esten Speichereinrichtung gespeicherten Daten mit den in der zweiten Speichereinrichtung gespeicherten Daten zu identifizieren und die erste Speichereinrichtung derart zu adressieren, daß die erste Speichereinrichtung die darin gespeicherten Daten auf die Telefonleitung ausgeben, um die Daten zu dem entfernten Zentralrechner zu übertragen, sofern die Karte als eine Kreditkarte identifiziert worden ist; wobei der entfernte Zentralrechner weiter dazu eigerichtet ist, den weiteren Rechner der Kreditorganisation zu adressieren, wenn Daten von dem Fernsprechbezahlgerät bezüglich der Kreditkarte empfangen werden, und die Daten zu dem weiteren Rechner zu übertragen, um den weiteren Rechner zu veranlassen, die Echtheit der Kreditkarte zu prüfen, und, sofern die Kreditkarte als echte Kreditkarte von dem weiteren Rechner erkannt worden ist, das Fernsprechbezahlgerät für einen Telefonanruf freizugeben; und das Fernsprechbezahlgerät weiterhin dazu eingerichtet ist, das Rechnungssignal, das von der Rechnungseinrichtung während des Telefonanrufs erzeugt wird, auf die Telefonleitung zur Übertragung über diese zum Zentralrechner auszugeben, wenn ferngesteuert berechtigt; und der entfernte Zentralrechner weiterhin dazu eingerichtet ist, das von dem Fernsprechbezahlgerät empfangene Rechnungssignal zu dem weiteren Rechner zu übertragen.

7. Servicebezahlsystem nach einem der Ansprüche 2 bis 6, bei dem das Fernsprechbezahlgerät weiterhin eine Wähleinrichtung enthält, umfassend eine manuelle betätigbare Schaltereinrichtung zum Erzeugen einer Sequenz aus Tonimpulssignalen und zum Zuführen der Sequenz zur Telefonvermittlungszentrale über die Telefonleitung zur Adressierung von Wähleinrichtungen der Telefonvermittlungszentrale.

8. Serviecebezahlsystem nach Anspruch 7, bei dem das Fernsprechbezahlgerät weiterhin eine weitere, manuell bedienbare Schaltereinrichtung und eine Simmgeneratoreinrichtung enthält, wobei die weitere, manuell betätigbare Schaltereinrichtung mit der Stimmgeneratoreinrichtung verbunden ist und dazu eingerichtet ist, letztere zu aktivieren, die erste Speichereinrichtung weiterhin dazu eingerichtet ist, die Sequenz von Tonimpulssignalen, die mittels der manuell betätigbaren Schaltereinrichtungen der Wähleinrichtung erzeugt werden, zu speichern, die Stimmgeneratoreinrichtung dazu eingerichtet ist, ein Anforderungssignal zu erzeugen, und mit der Telefonleitung verbindbar ist, um das Anforderungssignal zu erzeugen und an die Telefonleitung abzugeben, wenn durch die weitere, manuell betätigbare Schaltereinrichtung aktiviert, das Anforderungssignal weiterhin zu dem Telefonteilnehmer übertragen wird, der durch die Sequenz von Tonimpulssignalen adressiert wird, die von der Einrichtung der manuell betätigbaren Schaltereinrichtung der Wähleinrichtung erzeugt werden, und das Fernsprechbezahlgerät weiterhin dazu eingerichtet ist, für den Telefonanruf durch ein Annahmesignal ermächtigt zu werden, das dem Fernsprechbezahlgerät von dem Telefonteilnehmergerät in Abhängigkeit von dem Anforderungssignal zugeführt wird.

9. Serviecebezahlsystem nach einem der Ansprüche 2 bis 8, bei dem das Fernsprechbezahlgerät weiterhin eine Empfängereinrichtung enthält, umfassend wenigstens zwei elektroakustische Wandler, von denen einer dazu eingerichtet ist, akustische Energie in elektrische Energie umzuwandeln und die akustische Energie der Telefonleitung zuzuführen, wenn das Fernsprechbezahlgerät in Betrieb ist, und ein anderer dazu eingerichtet ist, elektrische Energie von der Telefonleitung zu empfangen und die elektrische Energie in akustische Energie umzuwandeln, wenn das Fernsprechbezahlgerät in Betrieb ist.

10. Serviecebezahlsystem nach einem der Ansprüche 2 bis 9, bei dem die erste Speichereinrichtung und die zweite Speichereinrichtung des Fernsprechbezahlgerätes von ersten bzw. zweiten Teilen einer einzigen Speichereinrichtung gebildet werden.

11. Serviecebezahlsystem nach einem der Ansprüche 2 bis 10, bei dem die erste Speichereinrichtung des Fernsprechbezahlgerätes durch einen flüchtigen Speicher gebildet ist und eine zweite Speichereinrichtung des Fernsprechbezahlgerätes von dem nicht-flüchtigen Speicher gebildet ist.

12. Serviecebezahlsystem nach einem der Ansprüche 2 bis 11, bei dem das Fernsprechbezahlgerät weiterhin eine zentrale Steuereinrichtung enthält, die den Gesamtbetrieb des Gerätes steuert.

13. Serviecebezahlsystem nach Anspruch 12, bei dem die zentrale Steuereinrichtung des Fernsprechbezahlgerätes von einer Mikrocomputereinrichtung gebildet ist.

14. Serviecebezahlsystem nach einem der Ansprüche 2 bis 13, bei dem das Fernsprechbezahlsystem weiterhin Verschlüsselungs- und Entschlüsselungseinrichtungen enthält, wobei eine Verschlüsselungseinrichtung zwischen die erste Speichereinrichtung und die Telefonleitung und eine Entschlüsselungseinrichtung zwichen die Telefonleitung und die zweite Speichereinrichtung geschaltet ist, um die Daten, die von der ersten Speichereinrichtung an die Telefonleitung ausgegeben werden, in einem verschlüsselten Zustand zuzuführen, und um die Daten, die von dem entfernten Zentralrechner zu der zweiten Speichereinrichtung übertragen werden, von einem verschlüsselten Zustand in einen entschlüsselten Zustand zu entschlüsseln.

15. Serviecebezahlsystem nach einem der Ansprüche 2 bis 14, bei dem das Fernsprechbezahlgerät weiterhin eine Anzeigeeinrichtung enthält, die mit der Komparatoreinrichtung, der Subtrahiereinrichtung und der Toreinrichtung verbunden ist, um Information, die dem Annahmesignal entspricht, oder alternativ dem Zurückweisungssignal entspricht, die von der Komparatoreinrichtung zugeführt werden, anzuzeigen, um den von der Subtrahiereinrichtung zugeführten Betrag anzuzeigen und um weiterhin die von der Toreinrichtung zugeführte Information anzuzeigen.

16. Serviecebezahlsystem nach einem der Ansprüche 2 bis 15, bei dem die Karte eine Karte ist, die einen Streifen aus magnetischem Material aufweist, der auf einer Seitenfläche der Karte angeordnet ist, wobei die Lese- und Schreibeinrichtungen des Fernsprechbezahlgerätes magnetische Lese- bzw. Schreibeinrichtungen sind.

17. Fernsprechbezahlgerät in einem Servicebezahlsystem nach Anspruch 2, und enthaltend: die Einrichtung zur Aufnahme der Karte, die Leseeinrichtung, die Schreibeinrichtung, die erste Speichereinrichtung, die zweite Speichereinrichtung, die Rechnungseinrichtung, die Subtrahiereinrichtung, und die Toreinrichtung des Fernsprechbezahlgerätes des Servicebezahlsystems nach Anspruch 2.

18. Fernsprechbezahlgerät in einem Servicebezahlsystem nach Anspruch 4, und enthaltend: die Einrichtung zur Aufnahme der Karte, die Leseeinrichtung, die Schreibeinrichtung, die Rechnungseinrichtung, die Subtrahiereinrichtung, und die Toreinrichtung des Fernsprechbezahlgerätes des Servicebezahlsystems nach Anspruch 4.

19. Fernsprechbezahlgerät nach einem der Ansprüche 17 oder 18, wobei das Fernsprechbezahlgerät weiterhin dazu eingerichtet ist, mittels einer anderen Karte betätigt zu werden, die eine Kreditkarte repräsentiert und die von der Aufnahmeeinrichtung des Fernsprechbezahlgerätes aufnehmbar ist und weiterhin Daten enthält, die von der Karte ablesbar sind und die die Karte identifizieren, wobei der entfernte Zentralrechner mit einem weiteren Rechner einer Kreditorganisation verbunden oder verbindbar ist; wobei die Komparatoreinrichtung weiterhin dazu eingerichtet ist, die Karte als eine Kreditkarte auf der Grundlage des Vergleichs der in der ersten Speichereinrichtung gespeicherten Daten mit den in der zweiten Speichereinrichtung gespeicherten Daten zu identifizieren und die erste Speichereinrichtung derart zu adressieren, daß die erste Speichereinrichtung die darin gespeicherten Daten an die Telefonleitung ausgibt, um die Daten zu dem entfernten Zentralrechner zu übertragen, sofern die Karte als eine Kreditkarte identifiziert worden ist.

20. Fernsprechbezahlgerät nach einem der Ansprüche 17 bis 19, wobei das Fernsprechbezahlgerät weiterhin eine Wähleinrichtung enthält, die eine manuell betätigbare Schaltereinrichtung aufweist, um eine Sequenz von Tonimpulssignalen zu erzeugen und die Sequenz an die Telefonvermittlungszentrale über die Telefonleitung auszusenden, um Wähleinrichtungen der Telefonvermittlungszentrale zu adressieren.

21. Fernsprechbezahlgerät nach Anspruch 20, bei dem das Fernsprechbezahlgerät weiterhin eine weitere, manuell betätigbare Schaltereinrichtung und eine Stimmgeneratoreinrichtung enthält, die weitere manuell betätigbare Schaltereinrichtung mit der Stimmgeneratoreinrichtung verbunden ist und dazu eingerichtet ist, letztere zu aktivieren, die erste Speichereinrichtung weiterhin dazu eingerichtet ist, die Sequenz der Tonimpulssignale zu speichern, die mittels der manuell betätigbaren Schaltereinrichtung der Wähleinrichtung erzeugt wird, die Stimmgeneratoreinrichtung dazu eingerichtet ist, ein Anforderungssignal zu erzeugen, und mit der Telefonleitung verbindbar ist, um das Anforderungssignal zu erzeugen und auf die Telefonleitung zu übertragen, wenn durch die weitere manuell betätigbare Schaltereinrichtung aktiviert, wobei das Anforderungssignal weiterhin an den Telefonteilnehmer übertragen wird, der durch die Sequenz der Tonimpulssignale adressiert wird, die mittels der manuell betätigbaren Schaltereinrichtungen der Wähleinrichtung erzeugt werden, und das Fernsprechbezahlgerät weiterhin dazu eingerichtet ist, für den Telefonanruf durch ein Annahmesignal freigegeben zu werden, das zu dem Fernsprechbezahlgerät von dem Telefonteilnehmergerät in Abhängigkeit von dem Anforderungssignal zugeführt wird.

22. Fernsprechbezahlgerät nach einem der Ansprüche 17 bis 21, wobei das Fernsprechbezahlgerät weiterhin enthält: eine Empfängereinrichtung mit wenigstens zwei elektroakustischen Wandlern, von denen einer dazu eingerichtet ist, akustische Energie in elektrische Energie umzuwandeln und die akustische Energie der Telefonleitung zuzuführen, wenn das Fernsprechbezahlgerät in Betrieb ist, und ein anderer dazu eingerichtet ist, elektrische Energie von der Telefonleitung aufzunehmen und die elektrische Energie in akustische Energie umzuwandeln, wenn das Fernsprechbezahlgerät in Betrieb ist.

23. Fernsprechbezahlgerät nach einem der Ansprüche 17 oder 19 bis 22, wobei die erste Speichereinrichtung und die zweite Speichereinrichtung des Fernsprechbezahlgerätes von ersten und zweiten Teilen einer einzigen Speichereinrichtung gebildet sind.

24. Fernsprechbezahlgerät nach einem der Ansprüche 17 oder 19 bis 23, bei dem die erste Speichereinrichtung des Fernsprechbezahlgerätes von einem flüchtigen Speicher gebildet ist und eine zweite Speichereinrichtung des Fernsprechbezahlgerätes von dem nicht-flüchtigen Speicher gebildet ist.

25. Fernsprechbezahlgerät nach einem der Ansprüche 16 bis 24, bei dem das Fernsprechbezahlgerät weiterhin eine zentrale Steuereinrichtung enthält, die den Gesamtbetrieb des Gerätes steuert.

26. Fernsprechbezahlgerät nach Anspruch 25, bei dem die zentrale Steuereinrichtung des Fernsprechbezahlgerätes von einer Mikrocomputereinrichtung gebildet ist.

27. Fernsprechbezahlgerät nach einem der Ansprüche 17 oder 19 bis 25, wobei das Fernsprechbezahlgerät weiterhin Verschlüsselungs- und Entschlüsselungseinrichtungen enthält, wobei eine Entschlüsselungseinrichtung zwischen die erste Speichereinrichtung und die Telefonleitung und eine Entschlüsselungseinrichtung zwischen die Telefonleitung und die zweite Speichereinrichtung geschaltet sind, um die Daten, die von der ersten Speichereinrichtung an die Telefonleitung ausgegeben werden, in verschlüsseltem Zustand zuzuführen, und um die Daten, die von dem entfernten Zentralrechner der zweiten Speichereinrichtung zugeführt werden, von einem verschlüsselten Zustand in einen entschlüsselten Zustand zu entschlüsseln.

28. Fernsprechbezahlgerät nach einem der Ansprüche 17 bis 27, bei dem das Fernsprechbezahlgerät weiterhin eine Anzeigeeinrichtung enthält, die mit der Vergleichseinrichtung, der Subtrahiereinrichtung und der Toreinrichtung verbunden ist, um Information entsprechend dem Annahmesignal oder alternativ dem Zurückweisungssignal, das von der Vergleichseinrichtung zugeführt wird, anzuzeigen, um den von der Subtrahiereinrichtung gelieferten Betrag anzuzeigen und um weiterhin von der Toreinrichtung zugeführte Information anzuzeigen.

**29.** Fernsprechbezahlgerät nach einem der Ansprüche 17 bis 28, bei dem die Karte eine Karte ist, die einen Streifen aus magnetischem Material aufweist, der auf einer Seitenfläche der Karte angeordnet ist, wobei die Lese- und Schreibeinrichtungen des Fernsprechbezahlgerätes magnetische Lese- bzw. Schreibeinrichtungen sind.

**30.** Ein örtlicher Rechner in einem Servicebezahlsystem nach Anspruch 4, und enthaltend:
die erste Speichereinrichtung,
die zweite Speichereinrichtung,
die Vergleichseinrichtung des örtlichen Rechners des Servicebezahlsystems nach Anspruch 4.

**31.** Örtlicher Rechner nach Anspruch 30, bei dem der örtliche Rechner mehreren Fernsprechbezahlgeräten zugeordnet ist.

Fig. 1

Fig. 2

Fig. 5

Fig. 3

# Fig. 4